# EUROPEAN PATENT APPLICATION

(11) **EP 4 597 010 A1**
(43) Date of publication of application: **06.08.2025**
(21) Application number: 23870839.0
(22) Date of filing: 26.09.2023
(51) Int. Cl.: F25D 17/04, F25D 23/00, F25D 11/02, B32B 33/00, B32B 3/24, C25B 1/04, H01M 4/133, H01M 4/1393, H01M 4/62, H01M 10/054, F25D 23/12, B01D 45/08, B01D 53/32, B01D 53/86, H05B 3/10, G01D 5/16, B82B 3/00, H01B 5/00, H01B 7/00, H01B 13/00, H05K 1/05

(54) **CATHODE FOR OXYGEN TREATMENT APPARATUS AND REFRIGERATOR**

(30) Priority: 30.09.2022 CN 202211215948
(71) Applicant: QINGDAO HAIER REFRIGERATOR CO., LTD., Qingdao, Shandong 266101 (CN); Haier Smart Home Co., Ltd., Qingdao, Shandong 266101 (CN)
(72) Inventor: MIAO, Jianlin, Qingdao, Shandong 266101 (CN); ZHANG, Hao, Qingdao, Shandong 266101 (CN); LI, Chunyang, Qingdao, Shandong 266101 (CN)
(74) Representative: Winter, Brandl - Partnerschaft mbB
(86) International application number: PCT/CN2023/121640
(87) International publication number: WO 2024/067611

(57) **Abstract**

The present application provides a cathode for an oxygen processing device, and an oxygen processing device and refrigerator, wherein the cathode comprises: a mesh conductive film comprising at least one movable intersection point configured to absorb stress through movement. When the cathode is subjected to stress, since the movable intersection point on the mesh conductive film can absorb stress through movement, the stress can be transferred to and "concentrated" at the movable intersection point. The movement of the movable intersection point will not cause significant changes in a shape of the mesh conductive film. Therefore, the mesh conductive film as a whole will hardly undergo significant deformation due to stress, which is beneficial for improving the structural stability of the cathode.

## Description

### TECHNICAL FIELD

The present application relates to gas preservation technology, and particularly to a cathode for an oxygen processing device and a refrigerator.

### BACKGROUND

Some oxygen processing devices utilize electrochemical reactions of electrode pairs to process oxygen, such as absorbing or generating oxygen. The electrodes of these oxygen processing devices, particularly the cathodes, generally require conductive layers.

The inventors have recognized that in the prior art, the conductive layer is made of metal with relatively small extensibility, which undergoes significant deformation under stress. This leads to reduced structural stability and performance degradation of the cathode during manufacturing and operation processes. More seriously, it may cause liquid leakage in the oxygen processing device.

The information disclosed in this background section is only for enhancing the understanding of the background of the present application and therefore may contain information that does not constitute prior art known to those skilled in the art.

### SUMMARY

An object of the present application is to overcome at least one technical deficiency in the prior art by providing a cathode for an oxygen processing device and a refrigerator.

A further object of the present application is to reduce or avoid significant deformation of a mesh conductive film under stress and improve the structural stability of the cathode.

In particular, according to one aspect of the present application, a cathode for an oxygen processing device is provided, comprising: a mesh conductive film, comprising at least one movable intersection point configured to absorb stress through movement.

Optionally, the mesh conductive film comprises a plurality of first conductive wires arranged in parallel with intervals and a plurality of second conductive wires arranged in parallel with intervals; and
the first conductive wires and the second conductive wires are interwoven to form at least one movable intersection point and a plurality of fixed intersection points; a number of the fixed intersection points is greater than a number of the movable intersection points.

Optionally, the fixed intersection points are distributed around the movable intersection point.

Optionally, the mesh conductive film comprises a central stress absorption area in a center region of the mesh conductive film and a peripheral stress absorption area surrounding the central stress absorption area; and
the movable intersection points are multiple, and distributed in both the central stress absorption area and the peripheral stress absorption area.

Optionally, a density of movable intersection points in the central stress absorption area is greater than a density of movable intersection points in the peripheral stress absorption area.

Optionally, movable intersection points in the peripheral stress absorption area are uniformly distributed circumferentially around the central stress absorption area.

Optionally, the first conductive wires and second conductive wires are perpendicular to each other.

Optionally, the mesh conductive film is a nickel mesh; and
the fixed intersection points are formed by welding or heat fusion of the first conductive wires and second conductive wires.

Optionally, the cathode for an oxygen processing device further comprises:
a first waterproof breathable membrane and a second waterproof breathable membrane, jointly holding the mesh conductive film; and
a catalyst membrane, arranged on a side of the first waterproof breathable membrane or the second waterproof breathable membrane facing away from the mesh conductive film; and the catalyst membrane, first waterproof breathable membrane, second waterproof breathable membrane, and mesh conductive film are formed into a cathode electrode through pressure welding and sintering.

Optionally, the cathode for an oxygen processing device further comprises:
a mounting frame, defining an annular groove surrounding edges of the cathode electrode for embedding and holding the edge of the cathode electrode.

According to another aspect of the present application, a refrigerator is provided, comprising:
a cabinet defining a storage space therein; and
an oxygen processing device, comprising:
   a housing, comprising a lateral opening; and
   a cathode for the oxygen processing device as described in any of technical solutions, arranged at the lateral opening to define an electrolytic chamber for containing electrolyte together with the housing, and configured to consume oxygen through electrochemical reaction under an electrolytic voltage;
   the cathode is in airflow communication with the storage space for consuming oxygen in the storage space through electrochemical reaction under the electrolytic voltage.

The cathode for the oxygen processing device, and the oxygen processing device and refrigerator of the present application, by providing at least one movable intersection point on the mesh conductive film of the cathode and configuring the movable intersection point to absorb stress through movement, when the cathode is subjected to stress, the stress can be transferred to and "concentrated" at the movable intersection point of the mesh conductive film through movement. The movement of the movable intersection point will not cause significant changes in a shape of the mesh conductive film. Therefore, the mesh conductive film as a whole will hardly undergo significant deformation due to stress, which is beneficial for improving the structural stability of the cathode.

According to detailed descriptions of specific embodiments of the present application in conjunction with accompanying drawings below, those skilled in the art will better understand the above and other objects, advantages and features of the present application.

### BRIEF DESCRIPTION OF THE DRAWINGS

The specific embodiments of the present application will be described in detail with reference to the accompanying drawings in an exemplary rather than limiting manner. Same reference numerals in the drawings indicate same or similar components or parts. Those skilled in the art should understand that the drawings are not necessarily drawn to scale. In the drawings:
FIG. 1 is a schematic structural view of a mesh conductive film of a cathode for an oxygen processing device according to an embodiment of the present application;
FIG. 2 is a schematic structural view of a cathode for an oxygen processing device according to an embodiment of the present application;
FIG. 3 is an assembly view of a mesh conductive film and a mounting frame of the cathode for the oxygen processing device shown in FIG. 2;
FIG. 4 is a schematic exploded view of a cathode for an oxygen processing device according to an embodiment of the present application;
FIG. 5 is a schematic structural view of an oxygen processing device according to an embodiment of the present application;
FIG. 6 is a schematic exploded view of the oxygen processing device shown in FIG. 5;
FIG. 7 is a schematic internal structural view of the oxygen processing device shown in FIG. 5;
FIG. 8 is a schematic top view of the internal structure of the oxygen processing device shown in FIG. 7;
FIG. 9 is a schematic structural view of a mounting box of the oxygen processing device shown in FIG. 5, with a top wall of the mounting box omitted;
FIG. 10 is an assembly view of a positioning mechanism and an airflow promoting device of an oxygen processing device according to an embodiment of the present application;
FIG. 11 is a schematic exploded view of the assembly structure of the positioning mechanism and airflow promoting device shown in FIG. 10;
FIG. 12 is a schematic structural view of an oxygen processing assembly of an oxygen processing device according to an embodiment of the present application;
FIG. 13 is a schematic structural view of a refrigerator according to an embodiment of the present application.

### DETAILED DESCRIPTION

Embodiments of the present application will now be described in detail, with one or more examples illustrated in accompanying drawings. The provided embodiments are intended to explain rather than limit the present application. In fact, various modifications and variations of the present application will be readily understandable to those skilled in the art without departing from a scope or spirit of the present application. For example, features illustrated or described as part of one embodiment can be used with another embodiment to yield still further embodiments. Therefore, the present application is intended to cover such modifications and variations that fall within a scope of appended claims and their equivalents.

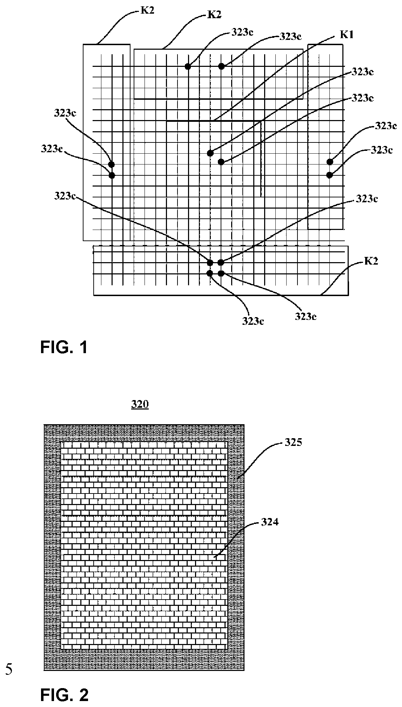

A cathode 320 for an oxygen processing device 10, as well as the oxygen processing device 10 and a refrigerator 20 according to embodiments of the present application will be described with reference to FIGS. 1 to 13. Terms such as "inner", "outer", "upper", "lower", "top", "bottom", "horizontal", "transverse", "vertical" and the like indicating orientations or positional relationships are based on orientations of the cathode 320 for the oxygen processing device 10, the oxygen processing device 10 and the refrigerator 20 under normal use conditions as reference, and refer to the orientations or positional relationships shown in the drawings, which are used merely for a purpose of description and simplification of the present application, and should not indicate or imply that devices or elements referred to must have particular orientations, be constructed or operated in particular orientations. Therefore, these terms should not be construed as limitations of the present application. For illustrating structures of devices clearly, some drawings of the present application are shown in perspective views.

In the description of embodiments, terms such as "first", "second" and the like are used for descriptive purposes only and cannot be understood to indicate or imply relative importance or implicitly specify the number of technical features indicated. Thus, features defined as "first", "second" and the like may explicitly or implicitly include at least one such feature is included, that is, including one or more such features. It should be understood that the term "plurality" means at least two, for example, two, three, etc., unless otherwise explicitly specified. When a feature "includes" or "comprises" one or some features covered by it, unless otherwise specifically described, this indicates that other features are not excluded and other features may be further included or comprised.

Unless otherwise explicitly stipulated and limited, terms such as "mounting", "interconnected", "connection", "fixing", "coupling" and the like should be broadly interpreted. For example, they may refer to fixed connection or detachable connection, or integration; mechanical connection or electrical connection; direct connection or indirect connection through intermediate media, or communication between two elements or interaction relationship between two elements, unless otherwise explicitly limited. Those skilled in the art should be able to understand the specific meanings of the above terms in the present application according to specific situations.

In the description of the embodiments, terms such as "an embodiment", "some embodiments", "example", "an example" and the like indicate that specific features, structures, materials, or characteristics described in connection with the embodiment or example are included in at least one embodiment or example of the present application. In the description, illustrative expressions of the above terms do not necessarily refer to same embodiments or examples. Moreover, the described specific features, structures, materials, or characteristics may be combined in any suitable manner in one or more embodiments or examples.

An embodiment of the present application first provides a cathode 320 for an oxygen processing device 10. FIG. 1 is a schematic structural view of a mesh conductive film 323 of the cathode 320 for the oxygen processing device 10 according to an embodiment of the present application. The oxygen processing device 10 is a device for processing oxygen through electrochemical reaction. Under an action of electrolytic voltage, oxygen undergoes reduction reaction at the cathode 320.

The cathode 320 comprise a mesh conductive film 323. The mesh conductive film 323 may serve as a current collecting layer of the cathode 320 for conducting electricity.

The mesh conductive film 323 is provided with at least one movable intersection point 323c configured to absorb stress through movement. The mesh conductive film 323 may comprise a plurality of interwoven conductive wires. The point where any two conductive wires intersect forms an intersection point. A movable intersection point 323c refers to an unfixed point formed when conductive wires in different directions are interwoven.

By providing at least one movable intersection point 323c on the mesh conductive film 323 of the cathode 320 and configuring the movable intersection point 323c to absorb stress through movement, when the cathode 320 is subjected to stress, since the movable intersection points 323c on the mesh conductive film 323 can absorb stress through movement, the stress can be transferred to and "concentrated" at the movable intersection points 323c. The movement of the movable intersection points 323c will not cause significant changes in a shape of the mesh conductive film 323. Therefore, the mesh conductive film 323 as a whole will hardly undergo significant deformation due to stress, which is beneficial for improving the structural stability of the cathode 320.

The oxygen processing device 10 may define an electrolytic chamber 311 for containing electrolyte. The cathode 320 may serve as a wall of the electrolytic chamber 311 or be configured to close an opening of the electrolytic chamber 311, thus contacting both the external air and the electrolyte.

If the shape of the cathode 320 changes significantly due to external forces, an external contour of the cathode 320 may separate from contact areas of the cathode 320, leading to liquid leakage. By providing movable intersection points 323c on the mesh conductive film 323, since not all intersection points of the mesh conductive film 323 are fixed connections, the movable intersection points 323c can form stress absorption areas of the mesh conductive film 323. External stress received by the cathode 320 can be almost entirely transferred to the movable intersection points 323c and converted into driving force for a movement of the movable intersection points 323c, thus being "absorbed" by the mesh conductive film 323. Therefore, during a manufacturing, assembly, and operation processes of the cathode 320, even if the mesh conductive film 323 is subjected to stress, it will hardly cause significant changes in the shape of the mesh conductive film 323 and the entire cathode 320. The electrolyte contained in the electrolytic chamber 311 will not leak due to deformation of the mesh conductive film 323 or cathode 320, thereby improving the structural stability and operational safety of the oxygen processing device 10.

It should be emphasized that although the prior art uses nickel mesh as the cathode 320 for electrochemical reaction devices, when facing issues of cathode 320 structural stability and electrochemical device liquid leakage, the remedial measures adopted in the prior art are "reducing or avoiding stress on the cathode 320" (for example, avoiding impacts on the cathode 320) or "monitoring leakage problems and repairing promptly when leakage occurs". However, the inventors have recognized that the prior art solutions cannot substantially improve the structural stability of the cathode 320. Constrained by the limitations of the aforementioned solutions in prior art, it is evident that persons skilled in the art would not have considered substantially improving the structural stability of the cathode 320 by starting from the structural modification of the mesh conductive film 323. Therefore, the inventors of the present application creatively provided the movable intersection point 323c on the mesh conductive film 323 as stress absorption areas to absorb stress, which breaks through the constraints of prior art, provides a completely new approach to solving the leakage problem of the oxygen processing device 10, and simultaneously solves a plurality of technical problems such as low structural stability of the cathode 320, achieving multiple benefits at once.

In some optional embodiments, the mesh conductive film 323 comprises a plurality of first conductive wires 323a arranged in parallel with intervals and a plurality of second conductive wires 323b arranged in parallel with intervals. The first conductive wires 323a and second conductive wires 323b are interwoven to form at least one movable intersection point 323c and a plurality of fixed intersection points 323d. In an example, each first conductive wire 323a may be interwoven with all second conductive wires 323b to form a plurality of intersection points. Similarly, each second conductive wire 323b may be interwoven with all first conductive wires 323a to form a plurality of intersection points.

A fixed intersection point 323d refers to a point where the intersecting first conductive wire 323a and second conductive wire 323b are fixedly connected. A movable intersection point 323c refers to a point where the intersecting first conductive wire 323a and second conductive wire 323b are not fixedly connected but are separately arranged.

The fixed intersection points 323d and movable intersection points 323c can combine to form all intersection points. In one example, a number of the fixed intersection points 323d is greater than a number of the movable intersection points 323c. That is, the majority of the intersection points are fixed intersection points 323d, while a small portion of the intersection points are movable intersection points 323c.

By making the number of the fixed intersection points 323d greater than the number of the movable intersection points 323c, the fixed intersection points 323d and movable intersection points 323c complement each other, providing the mesh conductive film 323 with high mechanical strength and reliable structural stability. A greater number of fixed intersection points 323d serves a shaping function, maintaining the mesh conductive film 323 in a flat, thin film shape under the effect of multiple fixed intersection points 323d. Under the effect of the fixed intersection points 323d, even when movable intersection points 323c move, the mesh conductive film 323 will not undergo significant deformation. The movable intersection points 323c serve to absorb stress through movement, thus maintaining an original state of the mesh conductive film 323 under stress and preventing stress from dispersing to affect the external contour of the mesh conductive film 323.

The movable intersection points 323c can be distributed at any position on the mesh conductive film 323. In some optional embodiments, the fixed intersection points 323d are distributed around the movable intersection point 323c. In other words, the movable intersection points 323c are surrounded by fixed intersection points 323d. That is, the movable intersection points 323c are not set at edges of the mesh conductive film 323.

By distributing the fixed intersection points 323d around the movable intersection points 323c, an impact of the movement of movable intersection points 323c on the shape of the mesh conductive film 323 can be further reduced.

The movable intersection points 323c can be one or multiple. In one example, the number of movable intersection points 323c can be set according to a working area of the mesh conductive film 323, increasing correspondingly with the increase of the working area of the mesh conductive film 323. When the working area of the mesh conductive film 323 is small, a single movable intersection point 323c may satisfy the stress absorption requirements of the mesh conductive film 323. When the working area is larger, increasing the number of movable intersection points 323c can enhance the stress absorption capacity of the mesh conductive film 323. The movable intersection points 323c can be evenly distributed across different regions to maintain of the mesh conductive film 323, ensuring that each region of the mesh conductive film 323 maintains good shape stability.

In some optional embodiments, the mesh conductive film 323 comprises a central stress absorption area K1 in a center region of the mesh conductive film 323 and a peripheral stress absorption area K2 surrounding the central stress absorption area K1.

The movable intersection points 323c are multiple. The movable intersection points 323c are distributed in both the central stress absorption area K1 and the peripheral stress absorption area K2. That is, movable intersection points 323c are arranged in both the central stress absorption area K1 and the peripheral stress absorption area K2.

With the technical solution of the embodiment, the movable intersection points 323c can be evenly distributed across the mesh conductive film 323. Whether stress is applied to a central region of the mesh conductive film 323 or peripheral region of the mesh conductive film 323, the movable intersection points 323c in the corresponding area can absorb the stress, thus reducing or avoiding significant shape changes in the corresponding area.

The number of movable intersection points 323c in the central stress absorption area K1 can be set according to the area of the central stress absorption area K1 and can be one or multiple. The number of movable intersection points 323c in the peripheral stress absorption area K2 can be set according to the area of the peripheral stress absorption area K2 and can be one or multiple.

In some optional embodiments, a density of movable intersection points 323c in the central stress absorption area K1 is greater than a density of movable intersection points 323c in the peripheral stress absorption area K2.

The inventors have recognized that due to the special position of the central region of the mesh conductive film 323, when any part of the peripheral region of the mesh conductive film 323 is subjected to stress, the central region of the mesh conductive film 323 may be affected. Therefore, setting a higher density of movable intersection points 323c in the central stress absorption area K1 than in the peripheral stress absorption area K2 can provide better stress absorption performance in the central region, improving the overall stress absorption effect and shape maintenance effect of the mesh conductive film 323, thus maintaining higher structural stability.

In some optional embodiments, the movable intersection points 323c in the peripheral stress absorption area K2 are uniformly distributed circumferentially around the central stress absorption area K1. In an example, the central stress absorption area K1 is a rectangular central region of the mesh conductive film 323, and the peripheral stress absorption area K2 is a square ring-shaped region surrounding the central stress absorption area K1. The movable intersection points 323c in the peripheral stress absorption area K2 are evenly distributed in the square ring-shaped region.

Based on the technical solution of the embodiment, the peripheral region of the mesh conductive film 323 can uniformly enhance stress absorption and shape maintenance effects. Since movable intersection points 323c at different positions can absorb stress from different directions, in the embodiment, the structural stability of cathode 320 can be comprehensively improved during manufacturing, assembly, and operation process.

In an example, the peripheral stress absorption area K2 can be divided into four different sections, separately located on longitudinal and transverse sides of the central stress absorption area K1. At least one movable intersection points 323c is arranged in each section. The areas of the four sections can be different. In an example, a number of moveable intersection points 323c in sections with larger areas is greater than a number of movable intersection points 323c in sections with smaller areas. The stress experienced by each section is absorbed by the movable intersection points 323c within the section.

In some optional embodiments, the density of movable intersection points 323c in the central stress absorption area K1 can be an integer multiple of the density of movable intersection points 323c in the peripheral stress absorption area K2, such as two times, three times, or more. The central stress absorption area K1 and peripheral stress absorption area K2 are indicated schematically by squares.

In an example, within the central stress absorption area K1, at least one movable intersection point 323c (such as one, two, or more) is arranged within each 50×50 (millimeter) unit; when a portion within the central stress absorption area K1 is less than one unit, the portion is calculated as one unit. Within the peripheral stress absorption area K2, at least one movable intersection point 323c (such as one, two, or more) is arranged within each 100×100 (millimeter) unit; when a portion within the peripheral stress absorption area K2 is less than one unit, the portion is calculated as one unit. Alternatively, in another example, within the peripheral stress absorption area K2, at least one movable intersection point 323c (such as one, two, or more) is arranged within one 100×100 (millimeter) unit; outside the unit, a number N of movable intersection points 323c can be arranged as N=(L-100)/(D×W), where L is a length of any section in the peripheral stress absorption area K2, D is a spacing between each grid, and W is a number of grids in a width direction of any section in the peripheral stress absorption area K2.

In another example, within the central stress absorption area K1, at least one movable intersection point 323c (such as one, two, or more) is arranged within each n×n unit. n represents the number of grids, which can be any value in a range of 5~10; when a portion within the central stress absorption area K1 is less than one unit, the portion is calculated as one unit. Within the peripheral stress absorption area K2, at least one movable intersection point 323c (such as one, two, or more) is arranged within each 2n×2n unit.

In some optional embodiments, the first conductive wires 323a and second conductive wires 323b are perpendicular to each other. With the technical solution of the embodiment, the first conductive wires 323a and second conductive wires 323b form rectangular grids through interweaving, with each rectangular grid having excellent structural stability, which can further improve the overall shape retention effect of the mesh conductive film 323.

The mesh conductive film 323 can be a nickel mesh. Of course, in another example, the mesh conductive film 323 can be a titanium mesh or other mesh metal structures or mesh non-metal structures with conductive functionality.

In some optional embodiments, the fixed intersection points 323d are formed by welding or heat fusion of the first conductive wires 323a and second conductive wires 323b to enhance the connection reliability of the fixed intersection points between the first conductive wires 323a and second conductive wires 323b. The first conductive wires 323a and second conductive wires 323b are not connected by welding or heat fusion at the movable intersection points 323c.

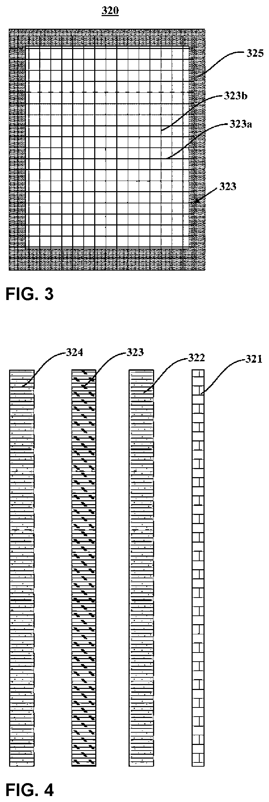

In some optional embodiments, the cathode 320 for the oxygen processing device 10 comprises a first waterproof breathable membrane 322, a second waterproof breathable membrane 324, and a catalyst membrane 321. FIG. 2 is a schematic structural view of the cathode 320 for the oxygen processing device 10 according to an embodiment of the present application. FIG. 3 is an assembly view of the mesh conductive film 323 and mounting frame 325 of the cathode 320 shown in FIG. 2, with the first waterproof breathable membrane 322, second waterproof breathable membrane 324, and catalyst membrane 321 omitted. FIG. 4 is a schematic exploded view of the cathode 320 according to an embodiment of the present application, with the mounting frame 325 omitted.

The first waterproof breathable membrane 322 and second waterproof breathable membrane 324 jointly hold the mesh conductive film 323, serving a waterproof and breathable function, preventing water or aqueous solutions from passing through while allowing gases such as oxygen to pass through.

The catalyst membrane 321 is arranged on a side of the first waterproof breathable membrane 322 or second waterproof breathable membrane 324 facing away from the mesh conductive film 323. The catalyst membrane 321, first waterproof breathable membrane 322, second waterproof breathable membrane 324, and mesh conductive film 323 are formed into a cathode electrode through pressure welding and sintering.

In an example, the first waterproof breathable membrane 322 can be arranged between the mesh conductive film 323 and catalyst membrane 321, with a first capillary pore formed inside the first waterproof breathable membrane 322 and only allowing gas passage, configured to form a first meniscus when in contact with electrolyte. The second waterproof breathable membrane 324 can be arranged on a side of the mesh conductive film 323 facing away from the catalyst membrane 321, with a second capillary pore formed inside the second waterproof breathable membrane 324 and only allowing gas passage, configured to form a second meniscus when in contact with electrolyte.

In other words, the cathode 320 of this embodiment has a four-layer membrane structure, which sequentially comprises the second waterproof breathable membrane 324, mesh conductive film 323, first waterproof breathable membrane 322, and catalyst membrane 321. The second waterproof breathable membrane 324 can be arranged at an outermost layer of the cathode 320, for example, in airflow communication with a storage space 610 of the refrigerator 20, while the catalyst membrane 321 can be at an innermost layer, for example, facing the electrolytic chamber 311. Oxygen from the storage space 610 flows successively through the second waterproof breathable membrane 324, mesh conductive film 323, and first waterproof breathable membrane 322 before reaching the catalyst membrane 321. Each of the four layers can be in a form of rectangular thin films, with approximately a same length and width, which can be arranged according to a size of a working space, for example, a length of each membrane can be 100-300mm and width of each membrane can be 50-200mm. In some embodiments, the mesh conductive film 323 can be larger than other membrane layers.

Since the cathode electrode is formed through pressure welding and sintering in an order of first waterproof breathable membrane 322, mesh conductive film 323, second waterproof breathable membrane 324, and catalyst membrane 321, and the first waterproof breathable membrane 322 and the second waterproof breathable membrane 324 separately comprise the first capillary pore and the second capillary pore that only allow gas passage, which provides the cathode electrode with waterproof and breathable properties. This ensures that oxygen can smoothly reach the catalyst membrane 321 from outside while preventing electrolyte leakage from inside.

The waterproof breathable membranes provide a gas-permeable waterproof interface between air and electrolyte, creating a pathway for oxygen to enter and diffuse to the catalyst membrane 321. The membranes' ability to allow gas passage while preventing liquid leakage mainly relies on a capillary action of the pore walls and hydrophobic properties of the adhesive material, with the capillary pores forming meniscus when in contact with electrolyte, namely the aforementioned first meniscus and second meniscus.

The first waterproof breathable membrane 322 and second waterproof breathable membrane 324 can have identical structure and composition. In the embodiment, the first waterproof breathable membrane 322 and second waterproof breathable membrane 324 can be made from polytetrafluoroethylene emulsion through a wet process, forming the first capillary pore and the second capillary pore that only allow gas passage. The mass concentration of the polytetrafluoroethylene emulsion can be any value within 40%~80%, for example 60%. Using polytetrafluoroethylene emulsion of specific concentration to fabricate the waterproof breathable membrane through the wet process, the pore size of the capillary pores and porosity of the waterproof breathable membrane can be maintained within a reasonable range, ensuring that the waterproof breathable membrane meets the performance requirements for both waterproofing and breathability. In the embodiment, the capillary pore diameter can be any value less than or equal to 100 micrometers, for example 1, 20, or 50 micrometers, and the membrane porosity of the waterproof breathable membrane can be any value within 60%~98%, for example 70% or 90%.

The inventors recognized that the poor conductivity of polytetrafluoroethylene leads to high ohmic resistance in the entire cathode 320. In some further embodiments, appropriate amounts of acetylene black and activated carbon can be added to the waterproof breathable membrane. This is done to enhance the conductivity of the waterproof breathable membrane, reduce the amount of polytetrafluoroethylene used, lower manufacturing costs of the cathode 320, improve adhesion and plasticity between components of the waterproof breathable membrane, and enhance waterproof and breathable properties of the waterproof breathable membrane.

Under the influence of electrolytic voltage, oxygen in the air can undergo reduction reaction at the catalyst membrane 321 of the cathode 320, for example, O2+2H2O+4e-→4OH-. The catalyst membrane 321 is arranged to catalyze this reduction reaction, increasing the electrochemical reaction rate.

The catalyst membrane 321 can be made from precursor through pressing operation. The precursor can be in powder form. The precursor includes carbon particles with catalyst particles deposited on at least some of carbon particles, where the catalyst particles are selected from a group consisting of platinum, gold, silver, manganese, and rubidium. The platinum, gold, silver, manganese, and rubidium are precious or rare metals. The carbon particles, which provide conductivity, can be carbon black, preferably conductive carbon black such as acetylene black. In some optional embodiments, the carbon particles can also be highly conductive graphite to improve conductivity of the carbon particles.

Due to the conductivity of carbon particles and the ability of precious and rare metals like platinum, gold, silver, manganese, and rubidium to promote oxygen adsorption and reduction, by combining carbon particles with catalyst particles, the cathode 320 of the embodiment achieves significantly improved electrocatalytic performance, beneficial for increasing the electrochemical reaction rate of the cathode 320.

Due to the excellent conductivity of carbon particles, using at least a portion of the carbon particles as carriers for catalyst particles reduces the overall electrochemical impedance of the catalyst membrane 321, improves the conductivity of cathode 320, thereby ensuring smooth progression of electrochemical reactions.

In some optional embodiments, the cathode 320 for the oxygen processing device 10 may further include a mounting frame 325, which defines an annular groove surrounding edges of the cathode electrode for embedding and holding the edge of the cathode electrode.

The mounting frame 325 can be formed around the periphery of the cathode electrode, which can be made through pressure welding and sintering, using injection molding process. During injection molding process, material is injected around sides of the cathode electrode, causing the mounting frame 325 to surround the cathode electrode.

Since the injection molding process causes temperature changes in the cathode electrode and environment of the cathode electrode, and creates pulling and compression forces on the cathode electrode, the mesh conductive film 323, being a metallic component, has relatively low extension rate. Without effective mitigation of shape changes in the mesh conductive film 323, separation could occur between the mesh conductive film 323 and the pressure-bonded first water proof breathable membrane 322 and second waterproof breathable membrane 324, greatly reducing the lifespan and performance of the cathode 320. More seriously, it could cause local protrusions in the mesh conductive film 323, damaging the structure of the cathode electrode and leading to electrolyte leakage.

Using the technical solution of the embodiment, with movable intersection points 323c on the mesh conductive film 323 serving as stress absorption sources, shape changes in the mesh conductive film 323 can be effectively mitigated, preventing adverse effects on the structure of the cathode 320 caused by stresses generated during injection molding process, subsequent manufacturing process, and operation process, thus improving structural ability of the cathode 320.

In some optional embodiments, the mounting frame 325 is made of flame-retardant material. For example, the mounting frame 325 can be made of flame-retardant materials meeting requirements of tests of glow-wire 750 or flame-retardant materials reaching HB flame retardancy grade.

With adopting the structure mentioned above, the flame-retardant mounting frame 325 surrounding the periphery of the cathode electrode can largely resist physical changes when the mounting frame 325 absorbing heat generated during electrochemical reactions, thus reducing or avoiding damage to surrounding components of the oxygen processing device 10 caused by heat from the cathode 320 during the electrochemical reactions of the cathode 320, improving device safety and structural stability.

Using the aforementioned flame-retardant materials to fabricate the mounting frame 325 prevents damage to the oxygen processing device 10 and surrounding components from excessive temperatures, even if working currents of the cathode electrode exceeds a preset threshold. The preset threshold can be any value within 0.1~0.2A range.

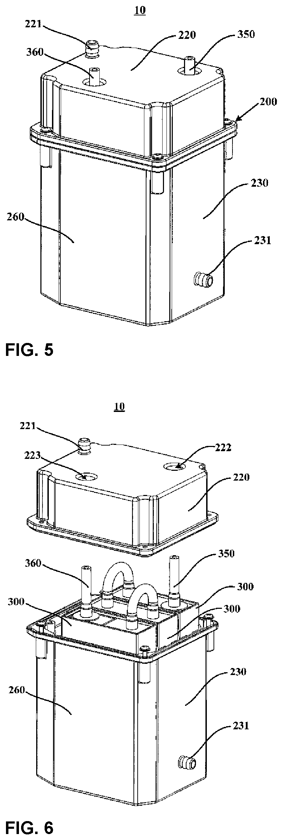

This embodiment also provides an oxygen processing device 10. The oxygen processing device 10 comprises a housing 310 and a cathode 320 for an oxygen processing device according to any above embodiment. FIG. 5 is a schematic structural view of an oxygen processing device 10 according to an embodiment of the present application, and FIG. 6 is a schematic exploded view of the oxygen processing device shown in FIG. 5.

The housing 310 comprises a lateral opening. For example, the housing 310 can take a form of a flat rectangular shaped. The lateral opening can be on any face of the housing 310, such as top, bottom, or side surfaces. In one example, the lateral opening can be on a face of the housing 310 with a largest surface area.

The cathode 320 is arranged at the lateral opening to define an electrolytic chamber 311 for containing electrolyte together with the housing 310, and configured to consume oxygen through electrochemical reaction under an electrolytic voltage. In one example, the mounting frame 325 of cathode 320 can be hot-plate welded to a periphery of the lateral opening to seal the electrolytic chamber 311.

The oxygen processing device 10 can further comprise an anode 330, arranged at intervals from cathode 320 within the electrolytic chamber 311, providing reactants to cathode 320 and generating oxygen through electrochemical reaction. OH- produced at cathode 320 can undergo oxidation reaction at anode 330, generating oxygen: 4OH-→O2+2H2O+4e-. The anode 330 can be nickel or titanium plate, or nickel or titanium mesh.

The above examples of electrochemical reactions at cathode 320 and anode 330 are merely illustrative. Based on understanding these embodiments, those skilled in the art should easily vary the type of electrochemical or expand structures for other types of electrochemical reactions in oxygen processing device 10, with such variations and expansions falling within the protection scope of the application.

The housing 310, cathode 320, and anode 330 together form an oxygen processing assembly 300. In some optional embodiments, the oxygen processing device 10 may further include a mounting box 200. The mounting box 200 comprises an air inlet port 231 and an air outlet port 221 for connecting external piping, and the interior of the mounting box 200 defines an airflow channel 280 connecting the air inlet port 231 and the air outlet port 221. Since the mounting box 200 comprises the air intake port 231 and the air outlet port 221, the airflow channel 280 can connect to a space to be regulated through piping, allowing gas from the space to be regulated to flow into the airflow channel 280 through the air inlet port 231, pass through the oxygen processing assembly 300, forming oxygen-depleted or oxygen-enriched gas under the action of the oxygen processing module 300.

The oxygen processing assembly 300 is arranged within the airflow channel 280 to process oxygen in the gas that flows into the airflow channel 280 from the air inlet port 231, producing oxygen-depleted or oxygen-enriched gas. The oxygen-depleted or oxygen-enriched gas is discharged through the air outlet port 221 to adjust oxygen content in the external space, such as the storage space 610 of the refrigerator 20. The inlet and outlet ports can connect to the same space through external piping, or to different spaces in another example.

By setting up air inlet port 231 and outlet port 221 on the mounting box 200 for external piping connection, and placing the oxygen processing assembly 300 in the airflow channel 280 connecting the air inlet port 231 and air outlet port 232, gas from external space can flow into the airflow channel 280 through the inlet port 231, be processed by the assembly 300 to form oxygen-depleted or oxygen-enriched gas, and exit through the outlet port 221. Since gas from external space can enter the air inlet port 231 through piping, the technical solution allows the oxygen processing device 10 to be placed anywhere, for example, a position even far from the space to be regulated, reducing dependencies of installation of the oxygen processing device 10 on structural constraints of environment, improving assembly flexibility of the oxygen processing device 10 in refrigerator 20, and expanding application range of the oxygen processing device 10.

In some optional embodiments, the oxygen processing device 10 may further comprise air inlet pipe and air outlet pipe. The air inlet pipe connects to the air inlet port 231 as an external piping of the air inlet port 231, and the air outlet pipe connects to the air outlet port 221. The end of the air inlet pipe away from the air inlet port 231 can extend into the space to be regulated. The end of the air outlet pipe away from the air outlet port 221 can extend into the space to be regulated. Gas from the space to be regulated flows into the air inlet port 231 through the air inlet pipe, enters the airflow channel 280, then exits the airflow channel 280 through the air outlet port 221 and returns to the space to be regulated through the air outlet pipe. The air inlet port 231 and the air outlet port 221can connect directly or indirectly to their respective external piping.

In one example, the inlet port 231 and outlet port 221 can be openings or holes in the mounting box 200. In some optional embodiments, the air inlet port 231 can be a hollow cylindrical port formed on the mounting box 200 and protruding outward; and/or the air outlet port 221 can be a hollow cylindrical port formed on the mounting box 200 and protruding outward.

When the air inlet port 231 is a hollow cylindrical port formed on the mounting box 200 and protruding outward, and/or the air outlet port 221 is a hollow cylindrical port formed on the mounting box 200 and protruding outward, the air inlet port 231 and/or the air outlet port 221 can connect to external piping through insertion or nesting, reducing operation difficulties of connecting the oxygen processing device 10 to the external piping.

In some optional embodiments, the inlet port 231 and outlet port 221 are formed on different walls of the mounting box 200, appropriately extending a distance between the the inlet port 231 and outlet port 221 to create a longer airflow path in the airflow channel 280, increasing flow time of the gas through the airflow channel 280 and allowing for more thorough contact with the oxygen processing assembly 300. In one example, the air inlet port 231 can be on the bottom wall 210 or one side wall of the mounting box 200, while the outlet port 221 is on the top wall 220 or another side wall of the mounting box 200. The positions of air inlet and air outlet ports can be interchanged.

In a further embodiment, the air inlet port 231 and air outlet port 221 are arranged with both vertical and horizontal offset. For example, in an example, the air inlet port 231 can be formed in the bottom section of the mounting box 200, while the air outlet port 221 can be formed in the top section of the mounting box 200; furthermore, the air inlet port 231 can be on one horizontal side of the mounting box 200, with the air outlet port 221 can be on another horizontal side of the mounting box 200. In a further example, for a hollow cylindrical mounting box 200, such as a hollow prism or hollow cylinder, the air inlet port 231 is arranged on the side wall of the mounting box 200 near a bottom of the mounting box 200, while the air outlet port 221 is arranged on the top wall 220 of the mounting box 200 away from the side wall where the air inlet port 231 is arranged, so as to be diagonally opposite to the air inlet port 231.

By placing the air inlet port 231 and the air outlet port 221 on different walls of the mounting box 200 or offsetting the air inlet port 231 and the air outlet port 221 vertically and horizontally, the airflow path of the gas through the airflow channel 280 can be extended, allowing fuller contact between the gas flowing through the airflow channel 280 and the oxygen processing assembly 300. This results in either lower oxygen content in the oxygen-depleted gas or higher oxygen content in the oxygen-enriched gas exiting through the air outlet port 221.

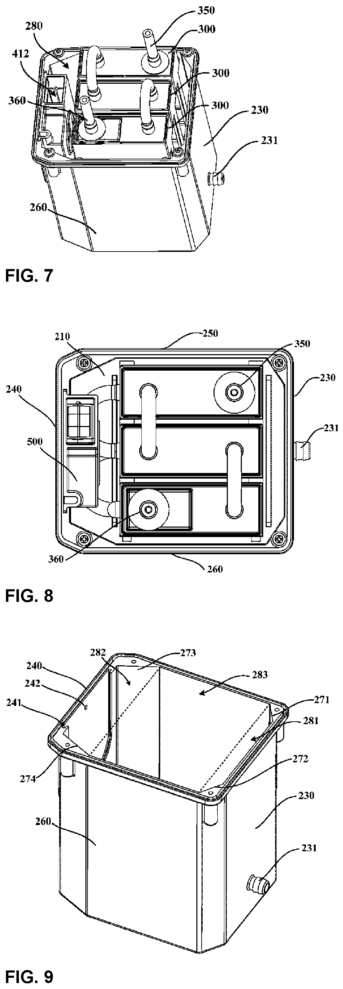

In some optional embodiments, the oxygen processing device 10 comprises an airflow promoting device 400 arranged within the airflow channel 280, with a suction port 411 and discharge port 412. The suction port 411 connects to the air inlet port 231, while the discharge port 412 faces the air outlet port 221. The airflow promoting device 400 is configured to facilitate airflow from the air inlet port 231 into the airflow channel 280 and toward the air outlet port 221. FIG. 7 shows a schematic internal structure view of the oxygen processing device 10 shown in FIG. 5 with the discharge port 412, and F IG. 8 shows a schematic top view of the internal structure of the oxygen processing device 10 shown in FIG. 7.

With the airflow promoting device 400 arranged in airflow channel 280, the suction port 411 of the airflow promoting device 400 connected to the air inlet port 231, and the discharge port 412 of the airflow promoting device 400 faced the air outlet port 221, gas from external space can be driven by the airflow promoting device 400 to flow from the air inlet port 231 into the airflow channel 280 and toward the air outlet port 221, creating an active, high-speed airflow circulation structure, shifting away from the reliance solely on molecular diffusion for oxygen capture. This increases gas flow volume through the airflow channel 280 per unit time and enhancing the working efficiency of the oxygen processing device 10.

In an example, the airflow promoting device 400 is a centrifugal fan. In another example, the airflow promoting device 400 could be replaced with other type of fans, such as axial fans, and so on.

In some optional embodiments, the airflow channel 280 comprises a first section 281 connecting to air inlet port 231 with a gradually expanding flow cross-sectional area, and a second section 282 connecting to the suction port 411 of the airflow promoting device 400 with a gradually contracting flow cross-sectional area. As gas flows through the first section 281, the cross-sectional area perpendicular to streamlines of the gas (for example, the flow cross-sectional area) gradually increases along a direction of gas flow, while as gas flows through the second section 282, the cross-sectional area perpendicular to streamlines of the gas (for example, the flow cross-sectional area) gradually decreases along a direction of gas flow.

By configuring the first section 281 connecting to air inlet port 231 with a gradually flow cross-sectional area and the second section 282 connecting to the suction port 411 of the airflow promoting device 400 with a gradually contracting flow cross-sectional area within the airflow channel 280, gas flowing through the airflow channel 280 can be separately guided by the first section 281 and the second section 282, reducing or avoiding turbulence. Under the influence of the first section 281, gas entering the air inlet port 231 can flow at a reduced speed, thus extending flow time and ensuring thorough interaction with the oxygen processing assembly 300, while under the influence of the second section 282, the gas can be accelerated and exit the air outlet port 221 at a higher speed, improving the gas adjustment efficiency of the space to be regulated.

In one example, the first section 281 and second section 282 can connect directly. The oxygen processing assembly 300 can be placed within the first section 281 or the second section 282, or can be placed at a junction of the first section 281 and the second section 282, or can be placed simultaneously within both the first section 281 and the second section 282.

In another example, the airflow channel 280 comprises a third section 283 connected between the first section 281 and the second section 282. FIG. 9 shows a schematic structural view of a mounting box 200 of the oxygen processing device 10 shown in FIG. 5, with a top wall 220 of the mounting box200 omitted. As shown in FIG. 9, the first section 281 and the second section 282 are on either side of the third section 283. Dotted lines in FIG. 9 indicate boundaries between the first section 281 and the third section 283, as well as the boundaries between the first section 281 and the third section 283.

The oxygen processing assembly 300 is arranged within the third section 283. Along the direction of gas flow, a cross-sectional area of the third section 283 (for example, a cross-sectional area perpendicular to streamlines of gas) remains constant. Flow velocity of gas passing through the third section 283 shows no significant change, ensuring uniform contact between the flowing gas and all parts of the oxygen processing assembly 300, producing oxygen-depleted or oxygen-enriched gas uniformly.

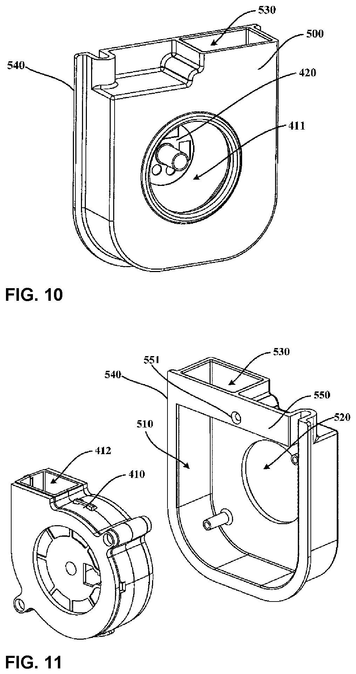

In some optional embodiments, the oxygen processing device 10 comprises a positioning mechanism 500, fixed within the airflow channel 280 and connected to the airflow promoting device 400 to secure the airflow promoting device 400 inside the airflow channel 280. FIG. 10 shows an assembly view of the positioning mechanism 500 and airflow promoting device 400 of the oxygen processing device according to an embodiment of the present application, while FIG. 11 provides a schematic exploded view of the assembly view of the positioning mechanism 500 and airflow promoting device 400 shown in FIG. 10.

When it is necessary to install the airflow promoting device 400 in airflow channel 280, the airflow promoting device 400 can first be assembled onto the positioning mechanism 500, and then the positioning mechanism 500 can be assembled within the airflow channel 280, such as fixing to an inner wall of the mounting box 200. Using the positioning mechanism 500 for indirect securing the airflow propulsion device 400 within the airflow channel 280 avoids needs to direct connection operations between the airflow promoting device 400 and the mounting box 200 in the airflow channel 280 which is relatively narrow.

In further embodiments, the airflow promoting device 400 comprises a volute casing 410 and an impeller 420 contained in the volute casing 410. Suction port 411 and discharge port 412 are respectively formed on the volute casing 410.

The positioning mechanism 500 defines a mounting groove 510 for accommodating the volute casing 410, as well as a first opening 520 connecting to discharge port 412 and a second opening 530 connecting to suction port 411. The first opening 520 faces the suction port 411 of the volute casing 410, while the second opening 530 faces discharge port 412 of the volute casing 410. The volute casing 410 can be secured within the mounting groove 510 through screw mounted.

By mounting the airflow promoting device 400 in mounting groove 510 of the positioning mechanism 500 and utilizing the first openings 520 and the second opening 530 to connect the mounting groove 510, assembly stability between the airflow promoting device 400 and the positioning mechanism 500 can be improved, and the risk of the positioning mechanism 500 obstructing in the suction port 411 and the discharge port 412 of the airflow promoting device 400 can be reduced or avoided.

In some optional embodiments, the positioning mechanism 500 defines a protruding claw 540 extending outwards from the at least a portion of an opening edge of the mounting groove 510. The inner wall of the mounting box 200 defines a slot 241 for the protruding claw 540 to insert into, enabling snap-fit assembly.

By adopting the above solution, the positioning mechanism 500 is fixed within the airflow channel 280 and securely connected to the airflow promoting device 400 to anchor the airflow promoting device 400 inside the airflow channel 280. When the positioning mechanism 500 is fixed to an inner wall of the mounting box 200 with the protruding claw 540 and slot 241, the assembly process of the airflow promoting device 400 in the oxygen processing device 10 can be simplified.

In some optional embodiments, the protruding claw 540 can extend radially outward from at least a portion of the opening edge of the mounting groove 510, such as extending outwards from horizontal ends and bottom end of the mounting groove 510.

In an example, the positioning mechanism 500 defines a flange 550 extending outward from a top end of an opening edge of the mounting groove 510. The flange 550 comprises a first screw hole 551, and an inner wall of the mounting box 200 correspondingly comprises a second screw hole 242, allowing the flange 550 to be fixed to the inner wall of the mounting box 200 through screw connection.

In another example, positioning mechanism 500 can define the protruding claw 540 and flange 550 simultaneously, using both snap-fit between the protruding claw 540 and the slot 241 and screw connection structure to secure the positioning mechanism 500 to the inner wall of the mounting box 200, further improving installation stability of airflow promoting device 400 in the airflow channel 280.

In some optional embodiments, both cathode electrode and anode 330 are plate-shaped electrodes. An outer surface of the cathode 320 extends along a direction of streamline of gas flowing through the third section 283. The second waterproof breathable membrane 324 can form the outer surface of the cathode 320.

That is, an extension direction of the outer surface of the cathode 320 is parallel to the direction of the streamline of the gas flowing through section 283, allowing sequential uniform contact between the gas flowing through the third section 283 and various parts of the outer surface of the cathode 320, extending contact time per unit time between cathode 320 and gas to be processed.

In some optional embodiments, housing 310 defines a gas discharge chamber 312 above electrolytic chamber 311, and the gas discharge chamber 312 is provided with a discharge hole 341. The gas discharge chamber 312 connects to electrolysis chamber 311 to collect oxygen generated by anode 330 and discharge the oxygen through the discharge hole 341. That is, the gas discharge chamber 312 connects to the electrolysis chamber 311 on one side and to the external environment on the other, allowing the oxygen discharged through the discharge hole 341 to be released into the external environment.

The oxygen collected and discharged through the gas discharge chamber 312 can be released directly or, in another example, sent to a high- oxygen preservation space of the refrigerator 20 to create a high-oxygen preservation atmosphere, improving preservation performance of the refrigerator 20.

By adopting the above structure, the oxygen processing device 10 can not only consume oxygen in a low-oxygen preservation space of the refrigerator 20 but also enhance oxygen level in the high-oxygen preservation space of the refrigerator 20, achieving functional reuse of the oxygen processing device 10.

In some optional embodiments, the gas discharge chamber 312 and electrolysis chamber 311 are integrally formed, eliminating the need for assembly structures between the gas discharge chamber 312 and electrolysis chamber 311 while ensuring airtight connection between the gas discharge chamber 312 and electrolysis chamber 311. A gas-liquid communication port is formed between the electrolysis chamber 311 and gas discharge chamber 312, allowing the electrolysis chamber 311 and gas discharge chamber 312 to be interconnected.

In some optional embodiments, mounting box 200 comprises an oxygen discharge port 222. The oxygen processing device 10 comprises an oxygen discharge pipe 350, one end of which is connected to the discharge hole 341, and another end of which extends through the oxygen discharge port 222 to the exterior of the mounting box 200, used to discharge oxygen from the discharge hole 341 to the outside of the mounting box 200.

In other optional embodiments, oxygen discharge pipe 350 of the oxygen processing device 10 can be omitted. The discharge hole 341 can be a hollow cylindrical port extending through the oxygen discharge port 222 and protruding outward. The discharge hole 341 can extend through the oxygen discharge port 222 to the outside of the mounting box 200, allowing the flowing oxygen to be discharged to the outside of the mounting box 200.

In some optional embodiments, the mounting box 200 comprises a liquid filling port 223. The oxygen processing device 10 comprises a liquid replenishment pipe 360, one end of which is connected to the electrolysis chamber 311, and another end of which extends through the liquid filling port 223 to the outside of the mounting box 200, used to guide external liquid into the electrolysis chamber 311.

In some optional embodiments, the mounting box 200 comprises a bottom wall 210, top wall 220, and a first wall 230 and second side wall 240 that respectively extend upward from the bottom wall 210 to the top wall 220 and are positioned opposite to each other.

The air outlet port 221 is on top wall 220 of the mounting box 200, typically on a horizontal side of the mounting box 200 for example. The air inlet port 231 is on first side wall 230 of the mounting box 200, typically on another horizontal side of the mounting box 200 for example, and the air inlet port 231 can be in a central of a bottom of the first side wall 230. The airflow promoting device 400 is fixed to second side wall 240 of the mounting box 200 and located below air outlet port 221.

By adopting the above structure, under an action of the airflow promoting device 400, gas flowing through the airflow channel 280 can flow diagonally upward, extending the flow path of the gas through airflow channel 280.

The mounting box 200 also comprises a third side wall 250 and a fourth side wall 260, and a first guide surface 271, a second guide surface 272, a third guide surface 273, and a fourth guide surface 274.

Here, the third side wall 250 and fourth side wall 260 respectively extend upward from bottom wall 210 to top wall 220, forming a tubular body with an upper opening together with the first side wall 230 and second side wall 240. In an example, first side wall 230 is parallel or roughly parallel to second side wall 240, and third side wall 250 is parallel or roughly parallel to fourth side wall 260.

The first guide surface 271 and second guide surface 272 respectively extend from an inner surface of the first side wall 230 to an inner surface of third side wall 250 and an inner surface of fourth side wall 260, forming an obtuse angle with an inner surface of the first side wall 230 to define the first section 281. The first guide surface 271 extends from an inner surface of an end section of the first side wall 230 near the third side wall 250 to an inner surface of an end section of the third side wall 250 near the first side wall 230. The second guide surface 272 extends from an inner surface of an end section of the first side wall 230 near the fourth side wall 260 to an inner surface of an end section of the fourth side wall 260 near the first side wall 230.

The third guide surface 273 and the fourth guide surface 274 respectively extend from an inner surface of the second side wall 240 to an inner surface of the third side wall 250 and fourth side wall 260, forming an obtuse angle with an inner surface of the second side wall 240 to define section 282. The third guide surface 273 extends from an inner surface of an end section of the second side wall 240 near the third side wall 250 to an inner surface of an end section of the third side wall 250 near the second side wall 240. The fourth guide surface 274 extends from an inner surface of an end section of the second side wall 240 near the fourth side wall 260 to an inner surface of an end section of the fourth side wall 260 near the second side wall 240.

In an example, the top wall 220, bottom wall 210, first side wall 230, second side wall 240, third side wall 250, fourth side wall 260, first guide surface 271, second guide surface 272, third guide surface 273, and fourth guide surface 274 of mounting box 200 can be manufactured through an integral molding process. By adopting the structure, since the mounting box 200 can be mass-produced using the integrated molding process, assembly procedures of the entire oxygen processing device 10 can be simplified while product consistency can be ensured.

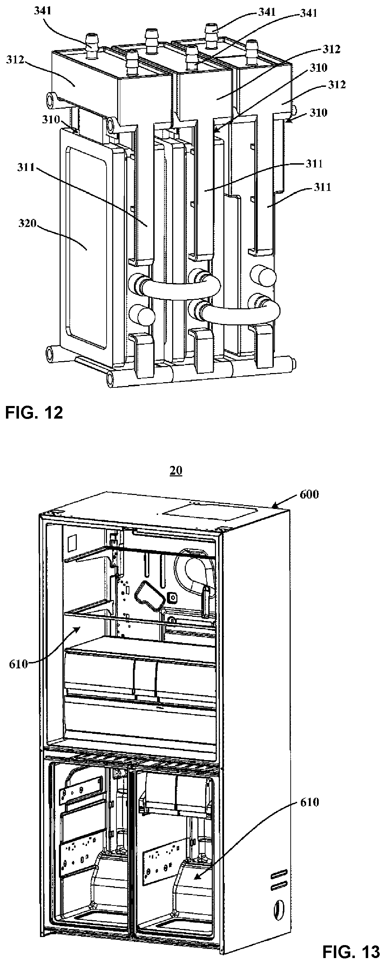

FIG. 12 shows a schematic structural view of an oxygen processing assembly 300 of an oxygen processing device 10 according to an embodiment of the present application. In some optional embodiments, multiple oxygen processing assemblies 300 can be arranged at intervals along a preset direction to enhance oxygen adjustment efficiency of the oxygen processing device 10.

The embodiment of the present application provides a refrigerator 20. The refrigerator 20 of the embodiment of the present application can be broadly interpreted to include refrigerators, freezers, or any cooling equipment with low-temperature storage function. FIG. 13 shows a schematic structural view of a refrigerator 20 according to an embodiment of the present application. The refrigerator 20 comprises a cabinet 600 and oxygen processing device 10 according to any of the above embodiments. Interior of the cabinet 600 defines a storage space 610. The oxygen processing device 10 is used to adjust the oxygen content in the storage space 610.

In an example, the storage space 610 can be a low-oxygen preservation space. Cathode 320 of the oxygen processing device 10 is in airflow communication with the storage space 610 for consuming oxygen in the storage space 610 through electrochemical reaction under the action of an electrolytic voltage, creating a low-oxygen preservation atmosphere in the storage space 610. In a further example, cabinet 600 can define a high-oxygen preservation space. The electrolytic chamber can be in airflow communication with the high-oxygen preservation space, with oxygen from anode 330 can be delivered to the high-oxygen preservation space, creating a high-oxygen preservation atmosphere in the high-oxygen preservation space.

Those skilled in the art should recognize that while multiple exemplary embodiments have been shown and described in detail, many other variations or modifications consistent with principles of the present application can be directly determined or derived from the disclosed content in the present application without departing from the spirit and scope of the present application. Therefore, the scope of the present application should be understood and deemed to cover all such variations or modifications.

## Claims

1. A cathode for an oxygen processing device, **characterized by** comprising:
a mesh conductive film, comprising at least one movable intersection point configured to absorb stress through movement.

2. The cathode for an oxygen processing device according to claim 1, **characterized in that**,
the mesh conductive film comprises a plurality of first conductive wires arranged in parallel with intervals and a plurality of second conductive wires arranged in parallel with intervals; and
the first conductive wires and second conductive wires are interwoven to form at least one movable intersection point and a plurality of fixed intersection points; a number of the fixed intersection points is greater than a number of the movable intersection points.

3. The cathode for an oxygen processing device according to claim 2, **characterized in that**,
the fixed intersection points are distributed around the movable intersection point.

4. The cathode for an oxygen processing device according to claim 2, **characterized in that**,
the mesh conductive film comprises a central stress absorption area in a center region of the mesh conductive film and a peripheral stress absorption area surrounding the central stress absorption area; and
the movable intersection points are multiple, and distributed in both the central stress absorption area and the peripheral stress absorption area.

5. The cathode for an oxygen processing device according to claim 4, **characterized in that**,
a density of movable intersection points in the central stress absorption area is greater than a density of movable intersection points in the peripheral stress absorption area.

6. The cathode for an oxygen processing device according to claim 4, **characterized in that**,
movable intersection points in the peripheral stress absorption area are uniformly distributed circumferentially around the central stress absorption area.

7. The cathode for an oxygen processing device according to claim 2, **characterized in that**,
the first conductive wires and second conductive wires are perpendicular to each other.

8. The cathode for an oxygen processing device according to claim 2, **characterized in that**,
the mesh conductive film is a nickel mesh; and
the fixed intersection points are formed by welding or heat fusion of the first conductive wires and second conductive wires.

9. The cathode for an oxygen processing device according to claim 1, **characterized by** further comprising:
a first waterproof breathable membrane and a second waterproof breathable membrane, jointly holding the mesh conductive film; and
a catalyst membrane, arranged on a side of the first waterproof breathable membrane or the second waterproof breathable membrane facing away from the mesh conductive film; and the catalyst membrane, first waterproof breathable membrane, second waterproof breathable membrane, and mesh conductive film are formed into a cathode electrode through pressure welding and sintering.

10. The cathode for an oxygen processing device according to claim 9, **characterized by** further comprising:
a mounting frame, defining an annular groove surrounding edges of the cathode electrode for embedding and holding the edge of the cathode electrode.

11. A refrigerator, **characterized by** comprising:
a cabinet, defining a storage space therein; and
an oxygen processing device, comprising:
a housing, comprising a lateral opening; and
a cathode for an oxygen processing device according to claim 1, arranged at the lateral opening to define an electrolytic chamber for containing electrolyte together with the housing, and configured to consume oxygen through electrochemical reaction under an electrolytic voltage;
the cathode is in airflow communication with the storage space for consuming oxygen in the storage space through electrochemical reaction under the electrolytic voltage.
